# EUROPEAN PATENT SPECIFICATION

(11) **EP 3 422 441 B1**
(45) Date of publication and mention of the grant of the patent: **29.04.2020**
(21) Application number: 16891202.0
(22) Date of filing: 30.08.2016
(51) Int. Cl.: H01M 2/34, H01M 10/44, B60L 50/64

(54) **SINGLE-CELL BATTERY, BATTERY MODULE, BATTERY PACK, AND ELECTRIC VEHICLE**
EINZELLIGE BATTERIE, BATTERIEMODUL, BATTERIEPACK UND ELEKTRISCHES FAHRZEUG
BATTERIE À ÉLÉMENT UNIQUE, MODULE DE BATTERIE, BLOC-BATTERIE, ET VÉHICULE ÉLECTRIQUE

(30) Priority: 25.02.2016 CN 201610105853
(43) Date of publication of application: 02.01.2019
(73) Proprietor: BYD Company Limited, Shenzhen, Guangdong 518118 (CN)
(72) Inventor: HU, Shichao, Shenzhen Guangdong 518118 (CN); ZHU, Yan, Shenzhen Guangdong 518118 (CN)
(74) Representative: Hoffmann Eitle
(86) International application number: PCT/CN2016/097406
(87) International publication number: WO 2017/143754

(56) References cited:
- CN-U- 201 508 864
- CN-U- 204 946 952
- CN-U- 205 488 328
- CN-Y- 201 069 792
- JP-A- H10 284 034
- US-A1- 2012 114 979
- US-A1- 2015 171 411

## Description

### BACKGROUND

### Technical Field

The present invention relates to the field of batteries, and in particular, to a single cell, a battery module, a battery pack, and an electric vehicle.

### Related Art

As energy storage units, batteries play an important role in various industries. For example, power batteries are widely applied in fields such as new energy vehicles. In a battery pack of a power battery, multiple single cells may be connected in series or in parallel to form a battery module, to implement a charge/discharge operation. The power battery usually uses a battery management system (BMS) to monitor a voltage change and a current change and calculate a state of charge in a charge/discharge process. However, a voltage sampling failure may lead to overcharging of the battery. Particularly, in a ternary system, there is a danger of battery burning or explosion if the overcharging reaches a certain amount.

In the existing technical solution, during monitoring of a battery voltage and current, a current integration method and an open circuit voltage method are used to calculate a battery level, to control battery charge/discharge management. However, there are disadvantages. For example, because of a battery voltage sampling failure, a battery current sampling failure, or a software failure, a battery is recharged for a long time and out of control. Particularly, in a case of recharging by using a charging pile, overcharging cannot be controlled if the charging pile fails to communicate with a battery manager, and when the overcharging reaches a certain amount, battery swelling and even explosions or fires are caused.

Therefore, it is of positive significance to provide a current interrupt technology for proactively and forcibly interrupting a current. However, for the power battery, a capacity of a power battery used in an automobile is usually ten-odd times of that of a 3C battery, and a current that needs to be guided is dozens or even hundreds of times of that of a minor class of battery. This also means that the apparatus capable of proactive and forcible disconnection needs to withstand a high current. In addition, requirements on weather resistance and leak tightness of the power battery are stricter because its usage environment is more complicated. Currently, there is no apparatus capable of proactive and forcible disconnection suitable for the power battery.

US 2015/0171411 A1 discloses a sealed secondary battery whose current-blocking system yields little change in the actuation pressure even on long-term use. The sealed secondary battery comprises a current-blocking system that is actuated by a pressure rise inside a battery case to disconnect conduction path between an electrode and an electrode terminal. Current-blocking system comprises a pressure-sensitive member having a pressure-sensitive deformable portion that deforms from a first state via snap-through deformation to a second state upon a pressure rise inside battery case, and is configured to disconnect the conduction path by snap-through deformation of pressure-sensitive deformable portion.

US 2012/0114979 A1 discloses a cylindrical battery in which an electrode assembly fabricated by rolling a cathode/separator/anode and an electrolyte are provided in a cylindrical can, wherein a cap assembly mounted on the opening top of the cylindrical can comprises: a safety vent provided with a predetermined notch, to allow breakage due to high-pressure gas of the battery, a current interruptive device to interrupt current, welded to the bottom of the safety vent, and a gasket for the current interruptive device to surround the periphery of the current interruptive device, wherein the current interruptive device comprises two or more through holes to allow exhaustion of gas, wherein the through holes have a size of 20 to 50% with respect to the total area of the current interruptive device.

### SUMMARY

An objective of the present invention is to provide a current interrupt device. The current interrupt device can withstand passing through of a high current, and when a battery is overcharged (or when an emergency situation of charging/discharging the battery occurs), the current interrupt device can forcibly disconnect a circuit, to prevent a danger such as a battery explosion from occurring.

The present invention is defined by the appended independent claim 1. Preferred optional features are recited in the dependent claims.

To achieve the foregoing objective, the present invention provides a single cell. The single cell includes a case, a battery cell accommodated in the case, an electrode terminal electrically connected to the battery cell, and a cover plate for encapsulating the case. The electrode terminal is disposed in the cover plate. The single cell further includes a current interrupt device electrically connected to the electrode terminal. The current interrupt device is in communication with gas inside the case. The electrode terminal includes a battery post, where one end of the battery post extends into the cover plate and the other end is electrically connected to the battery cell. The current interrupt device has a conductive member and a flipping member electrically connected to the conductive member. The flipping member and the conductive member can be electrically disconnected from each other under action of air pressure. The conductive member is connected to an outer end surface of the battery post. A ceramic ring is tightly connected between an outer periphery of the flipping member and the cover plate. The outer periphery of the flipping member is tightly connected to an outer end surface of the ceramic ring. An outer periphery of the battery post is connected to an inner end surface of the ceramic ring. The battery post is insulated from the outer periphery of the flipping member by using the ceramic ring.

Preferably, the battery post is provided with an air-guide duct communicating the inner part of the single cell and the current interrupt device.

Preferably, the outer end surface of the battery post is located inside the cover plate.

Preferably, the battery post includes a pole cap extending into the cover plate, and a cylinder connected to the pole cap and extending into the case, an extension portion extends outwards at a periphery of the pole cap along a radial direction of the battery post, an end portion of the extension portion is connected to the inner end surface of the ceramic ring, and the inner end surface of the ceramic ring extends into the cover plate.

Preferably, the cover plate is provided with a through hole into which the battery post is inserted; and a hole diameter of the through hole is greater than a sum of a diameter of the pole cap and a diameter of the ceramic ring.

Preferably, the extension portion is provided with an air-guide hole communicating the inner part of the single cell and the current interrupt device.

Preferably, the outer end surface of the battery post is provided with an accommodation hole, and an outer periphery of the conductive member is fixed to an inner wall of the accommodation hole.

Preferably, the battery post is provided with an air-guide duct communicating the inner part of the single cell and the current interrupt device, and the air-guide duct include an air-guide hole communicating the accommodation hole and the inner part of the single cell.

Preferably, the inner end surface of the ceramic ring is tightly connected to a transition member, the transition member is tightly connected to the cover plate, and the transition member is insulated from the battery post.

Preferably, an insulation protrusion extends from the inner end surface of the ceramic ring to the inner part of the case, and the outer periphery at an outer end of the battery post is insulated from the transition member by using the insulation protrusion.

Preferably, the transition member has a groove extending towards the inner part of the case, and a first connecting portion and a second connecting portion extending from the groove to directions of the cover plate and the ceramic ring respectively, the first connecting portion is connected to the cover plate, and the second connecting portion is connected to the inner end surface of the ceramic ring.

Preferably, the cover plate is provided with a through hole through which the battery post passes, an end surface of the through hole is in a staircase structure, and the first connecting portion of the transition member is embedded into and supports the staircase structure.

Preferably, a first insulation member is disposed below the cover plate and an inner surface of the transition member.

Preferably, a second insulation member is disposed below an inner surface of the battery post, and the second insulation member is in fit connection with the first insulation member.

Preferably, the outer end surface of the ceramic ring is formed in a stepped structure having an inner ring and an outer ring, and the outer periphery of the flipping member is in embedded connection with the inner ring.

Preferably, the outer end surface of the ceramic ring is tightly connected to a conductive ring, the outer periphery of the flipping member is tightly connected to the conductive ring, and the battery post is insulated from the conductive ring by using the ceramic ring.

Preferably, the outer end surface of the ceramic ring is formed in a stepped structure having an inner ring and an outer ring, and the conductive ring includes a conductive connecting portion located in the inner ring and a protruding edge connected to the outer ring.

Preferably, the current interrupt device further includes a covering cap, the covering cap and the flipping member are tightly connected to the conductive connecting portion, and the covering cap has an air hole.

Preferably, the flipping member is formed in a first sheet-like structure, the first sheet-like structure is provided with a connection hole, the conductive member is formed in a second sheet-like structure, the second sheet-like structure is provided with a boss, the boss passes through the connection hole, and the boss and the connection hole are girth-welded.

Preferably, the conductive member is provided with a bending structure protruding towards the inner part of the case, and the bending structure is disposed surrounding a connection point for connecting to the flipping member.

Preferably, the height of the bending structure is five to 10 times of the thickness of the conductive member.

Preferably, a bending angle of the bending structure is 5° to 15°.

The present invention also provides a battery module. The battery module is provided with the foregoing single cell.

The present invention also provides a battery pack. The battery pack is provided with the foregoing battery module.

Preferably, the battery pack is further provided with a gas detection device located inside the inclusion body and configured to detect flammable gas.

The present invention also provides an electric vehicle. The electric vehicle is provided with the foregoing battery module.

In the foregoing technical solution, a gas may be produced when the battery is in an emergency case. Therefore, as the air pressure increases, the flipping member can flip over under action of the air pressure, to disconnect from the conductive member, thereby disconnecting the charge/discharge circuit of the power battery, and further avoiding a further increase in the battery air pressure and explosions. In addition, the present invention has a simple structure, and particularly, a special structure is used for connection, thereby improving space utilization and energy density of the battery.

Other features and advantages of the present invention are to be described in detail in the following part of detailed description.

### BRIEF DESCRIPTION OF THE DRAWINGS

The accompanying drawings are used to provide a further understanding of the present invention, and constitute a part of the specification, which are used to explain the present invention in combination with the following specific embodiments, and do not constitute a limitation to the present invention. In the accompanying drawings:
FIG. 1 is a schematic structural diagram of a battery module according to a preferable embodiment of the present invention;
FIG. 2 is an exploded schematic structural diagram of a flipping member and a conductive member according to a preferable embodiment of the present invention;
FIG. 3 is a schematic structural sectional view of a flipping member and a conductive member in an assembled state according to a preferable embodiment of the present invention;
FIG. 4 is a schematic structural diagram of a cover plate according to a preferable embodiment of the present invention;
FIG. 5 is a schematic structural sectional view of a cover plate according to a preferable embodiment of the present invention;
FIG. 6 is a partial schematic structural sectional view of a cover plate according to another preferable embodiment of the present invention; and
FIG. 7 is a principle block diagram of a control system according to a preferable embodiment of the present invention.

Reference numerals: single cell 100; electrode terminal 101; cover plate 102; air-guide hole 103; battery post 104; pole cap 1041; cylinder 1042; extension portion 1043; accommodation hole 218;
current interrupt device 200; conductive member 201; flipping member 202; boss 203; connection hole 204; bending structure 205; insulation protrusion 206; ceramic ring 207; air hole 208; transition member 209; groove 210; first connecting portion 211; second connecting portion 212; first insulation member 213; second insulation member 214; internal guide member 215; conductive ring 216; conductive connecting portion 2161; protruding edge 2162; annular welding spot 217; covering cap 219;
gas detection device 300; control device 400; host computer main control chip 401; control module 402; relay 403; alarm device 500.

### DETAILED DESCRIPTION

The following describes in detail specific embodiments of the present invention with reference to the accompanying drawings. It should be understood that the specific embodiments herein are used merely for describing the present invention and are not intended to limit the present invention.

Unless otherwise specified, nouns of locations such as "up, down, left, and right" used in the present invention are generally defined based on figure plane directions of corresponding accompanying drawings, and "inside and outside" refers to an inner part and an outer part of a corresponding component.

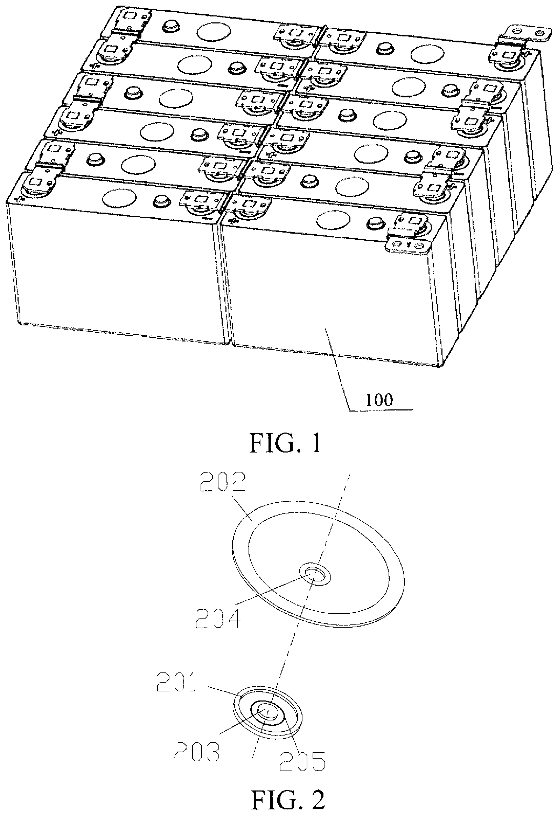

As shown in FIG. 1 to FIG. 7, the present invention provides technical solutions of a single cell, a battery module, a battery pack, and an electric vehicle. A current interrupt device is disposed inside the single cell. Multiple single cells are connected in series or in parallel to form the battery module and may be placed inside a battery pack to form a power battery. Moreover, in addition to the field of power batteries, various technical solutions provided in the present invention may be further widely applied to other battery fields. Specifically, the present invention describes a related single cell 100 by using a specific embodiment, where a current interrupt device 200 is related. The following describes the embodiments in detail with reference to the accompanying drawings.

First, as shown in FIG. 1 to FIG. 7, an embodiment of the present invention provides a battery module, including multiple single cells 100 connected in series or in parallel. The single cell may include a case, a battery cell accommodated in the case, an electrode terminal 101 electrically connected to the battery cell, and a cover plate 102 for encapsulating the case. The electrode terminal 101 is disposed in the cover plate 102, to input and output currents. The single cell 100 includes the current interrupt device 200. The current interrupt device is fixed relative to the cover plate 102 and electrically connected to the electrode terminal 101. Therefore, input and output of currents on the electrode terminal 101 can be controlled under action of the current interrupt device 200. That is, the current interrupt device 200 in the single cell 100 is generally connected to the battery cell. In this case, the electrode terminal 101 can normally input and output currents, to complete a charge/discharge operation of the single cell 100. However, in an emergency state, for example, when the battery is overcharged, the current interrupt device 200 may stop the current input and output of the electrode terminal 101 by disconnecting from the battery cell, to prevent the battery from being recharged at an excessive rate. Therefore, reliability of the current interrupt device 200 is crucial as an important safety measure. That is, the current interrupt device needs to be capable of making a quick response.

In the present invention, the current interrupt device 200 is a mechanical structure for sensing the air pressure. Specifically, the current interrupt device 200 is in communication with gas inside the case of the single cell 100, and can interrupt, under action of the air pressure, a current passing through the current interrupt device 200. Specifically, connections between internal components may be disconnected to stop current transmission, thereby stop charging/discharging of the battery in a timely manner. A source of the air pressure used is: for example, when an emergency case such as overcharging of the battery occurs, a gas is produced inside the battery, then leading to an increase in the air pressure inside the case, thereby generating air pressure power for driving the current interrupt device 200.

Specific embodiments according to FIG. 2 to FIG. 6 are used as an example. The current interrupt device 200 has a conductive member 201 and a flipping member 202 connected to the conductive member 201 for mutual electrical connection. In addition the flipping member 202 and the conductive member 201 can be electrically disconnected from each other under action of air pressure. In different embodiments of the present invention, electrical disconnection may be implemented in different manner. A connection point between the conductive member 201 and the flipping member 202 may be disconnected. For example, a welding spot between the conductive member 201 and the flipping member 202 is removed to implement the electrical disconnection. Alternatively, at least one of the conductive member 201 and the flipping member 202 may be disconnected. For example, a weakening portion is made in a corresponding component to implement disconnection of a structure, thereby implementing the electrical disconnection. That is, an objective of stopping current transmission by disconnecting a mechanical structure under action of the air pressure is achieved in the present invention. In this way, in this embodiment, when the battery is overcharged, a gap is produced inside the battery and then the air pressure increases. In this case, the flipping member 202 is disconnected from the conductive member 201 by performing a flipping action, so that a circuit between the electrode terminal 101 and the outside is disconnected, and charging of the battery is stopped, thereby avoiding a further increase in the air pressure inside the battery, and ensuring battery safety.

In this embodiment, the electrode terminal 101 includes a battery post 104 electrically connected to the battery cell, and the battery post 104 may be connected to the battery cell by using an internal guide member 215. One end of the battery post 104 extends into the cover plate 102, and the other end is electrically connected to the battery cell, to guide a current from the case.

In this embodiment, the current interrupt device 200 is mounted in the battery post 104. In this way, the air pressure inside the battery may be detected by using the battery post 104, so that the sensitivity is high. Moreover, the current interrupt device 200 does not need to be connected to the electrode terminal 101 additionally, thereby facilitating processing. Specifically, the conductive member 201 is connected to an outer end surface of the battery post 104. An outer periphery of the flipping member 202 is fixed relative to the cover plate 102. Specifically, a ceramic ring 207 is tightly connected between the outer periphery of the flipping member 202 and the cover plate 102. The outer periphery of the flipping member 202 is tightly connected to an outer end surface of the ceramic ring 207. That is, sealing by using the ceramic ring 207 in the present invention achieves higher reliability and weather resistance than insulation implemented by using plastics or rubber, and not only stable and tight connection of the current interrupt device 200 can be implemented, but also insulation between the battery post and the cover plate can be implemented. In this embodiment, the outer end surface of the ceramic ring 207 is formed in a stepped structure having an inner ring and an outer ring, and the outer periphery of the flipping member 202 is in embedded connection with the inner ring. In this way, under action of air pressure, the outer periphery of the flipping member 202 is used as a support point, and the weakening portion formed in the conductive member 201 can be pulled apart. Moreover, to enable the flipping member 202 to be under action of the air pressure, the outer periphery of the flipping member 202 may be sealed by means of, for example, ceramic welded sealing (brazing or laser welding). Herein and in similar descriptions, an outer end or an inner end is defined relative to the case along an axial direction of the battery post, and the "inside and outside" relative to an annular member, for example, the outer periphery, is defined relative to a center of the annular member along the radial direction.

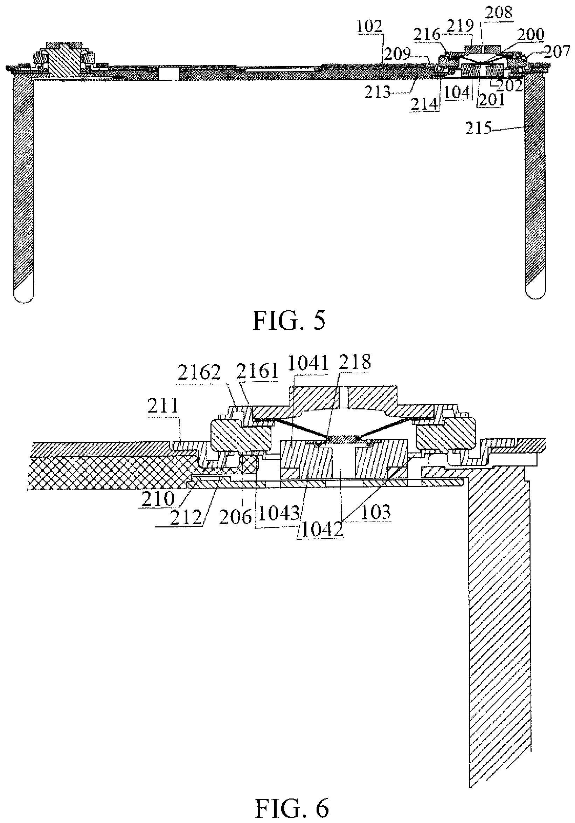

An improvement of the present invention is the outer periphery of the battery post 104 is connected to an inner end surface of the ceramic ring 207, and the battery post 104 is insulated from the outer periphery of the flipping member 202 by using the ceramic ring 207. Such a structure can further improve space utilization and energy density of the battery. In the present invention, particularly preferably, the outer end surface of the battery post 104 is located inside the cover plate 102, and this can effectively reduce space occupied by the battery post. Specifically, in this embodiment, the battery post 104 includes a pole cap 1041 extending into the cover plate 102, and a cylinder 1042 connected to the pole cap 1041 and extending into the case. An extension portion 1043 extends outwards at a periphery of the pole cap 1041 along a radial direction of the battery post. An end portion of the extension portion 1043 is connected to the inner end surface of the ceramic ring 207. That is, the extension portion 1043 is used to connect the battery post 104 and the inner end surface of the ceramic ring 207. In this case, there is no requirement on a location of the inner end surface of the ceramic ring 207. That is, effective utilization of the battery in a height direction can be implemented without changing the height of the ceramic ring 207. Specifically, the inner end surface of the ceramic ring 207 may extend into the cover plate 102, so that space occupied by the ceramic ring 207 in the height direction can be effectively reduced. Preferably, the extension portion 1043 is connected to a middle portion or a lower portion at the periphery of the pole cap 1041. That is, the outer end surface of the battery post 104 and the inner end surface of the ceramic ring 207 are staggered in the axial direction of the battery post 104. That is, the inner end surface of the ceramic ring 207 may be located below the outer end surface of the battery post 104, thereby further improving space utilization. A specific structure is shown in FIG. 5 to FIG. 6. The periphery of the pole cap 1041 and the periphery of the ceramic ring 207 may have a distance in the radial direction of the battery post 104. The cover plate 102 is provided with a through hole into which the battery post 104 is inserted. In the present invention, further preferably, a hole diameter of the through hole is greater than a sum of a diameter of the pole cap 1041 and a diameter of the ceramic ring 207. That is, both the pole cap 1041 and the ceramic ring 207 are inserted into the cover plate 102. Certainly, an outer end surface of the pole cap 1041 and the inner end surface of the ceramic ring 207 are located inside the through hole of the cover plate, and may pass through the through hole after the insertion, and are finally connected by using the extension portion 1043 in an appropriate shape. The present invention is not limited thereto. That is, in this embodiment, the height of the battery post 104 and that of the ceramic ring 207 may not be added.

To ensure that the weakening portion in the conductive member 201 can still be pulled apart when the conductive member 201 and the battery post 104 are fixed, preferably, the outer end surface of the battery post 104 is provided with an accommodation hole 218. In this way, the conductive member 201 may be stably fixed at the annular periphery, while a region inside the weakening portion can be pulled apart under action of external force such as tensile force of the flipping member 202 or the direct pressure of the gas because the region inside the weakening portion is not connected to the battery post 104.

In the present invention, the current interrupt device 200 may be in communication with gas inside the battery in multiple manners. In this embodiment, the battery post 104 is provided with an air-guide duct communicating an inner part of the case and the current interrupt device 200. In this way, air pressure is applied to the current interrupt device by directly using the internal structure of the battery post 104. Therefore, the structure is simpler.

The air-guide duct may include two types of air-guide holes 103 in this embodiment. A first-type air-guide hole 103 is used to communicate the accommodation hole 218 and the inner part of the case, that is, directly apply pressure to the conductive member 201 to make a bending structure 205 flip. That is, the air-guide duct includes the air-guide hole 103 for communicating the accommodation hole 218 and the inner part of the case. A second-type air-guide hole 103 is used to communicate the flipping member 202 and the inner part of the case, to apply pressure to the flipping member 202 to pull the weakening portion apart. To improve stress distribution efficiency of the flipping member 202, there are multiple air-guide holes 103 surrounding the accommodation hole 218. Therefore, under joint action of the two types of air-guide holes 103, sensitivity of the current interrupt device can be improved.

In addition, in this embodiment, the first-type air-guide holes 103 are formed inside the battery post 104 along a circumferential direction. That is, the air-guide hole 103 located in the extension portion 1043 is used to apply pressure to the flipping member 202, while the air-guide hole 103 below the accommodation hole 218 may directly apply pressure to the conductive member 201. As shown in FIG. 5 and FIG. 6, in this embodiment of the present invention, the extension portion 1043 and a body of the battery post 104 are both provided with the air-guide hole 103. The first-type air-guide holes 103 in the body are in communication with the accommodation hole 218 in the end surface, and there are four first-type air-guide holes 103 that are disposed at equal intervals along the circumferential direction. In another embodiment, alternatively, there may be another quantity of first-type air-guide holes 103. This is not limited in the present invention.

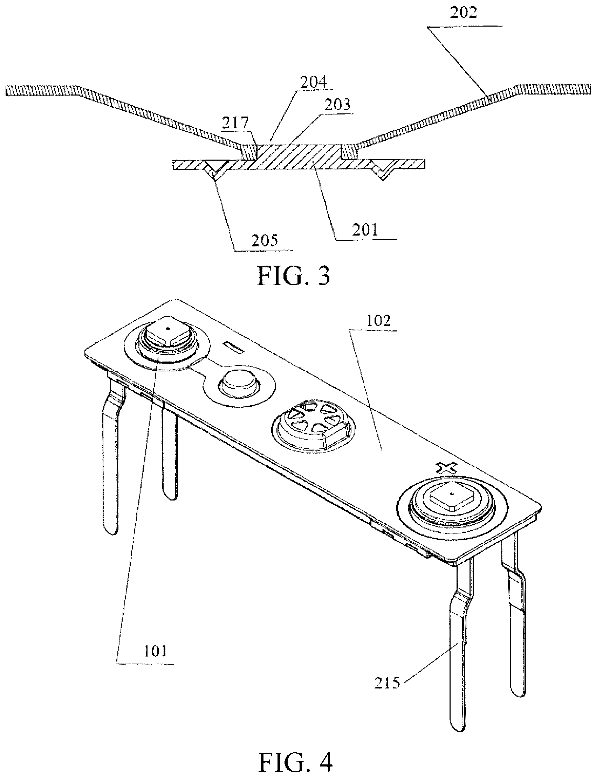

To apply to the field of power batteries, a high current needs to pass. Therefore, stability of a welded structure of the conductive member 201 and the flipping member 202 needs to be ensured, to prevent the high current from breaking the welded structure. In this way, in this embodiment, as shown in FIG. 2 and FIG. 3, the flipping member 202 and the conductive member 201 are connected to each other by using a boss welded structure. The boss welded structure includes a boss 203, a connection hole 204 accommodating the boss 203, and an annular welding spot 217 located between the boss 203 and the connection hole 204. One of the boss 203 and the connection hole 204 is located in the flipping member 202, and the other one is located in the conductive member 201. Therefore, it can be ensured that the annular welding spot 217 is used to firmly weld the boss 203 accommodated in the connection hole 204, and a passing area of the current can be increased to ensure passing of the high current. Specifically, in an embodiment, the boss 203 may be formed in the conductive member 201, and the connection hole 204 may be formed in the flipping member 202. More specifically, the flipping member 202 is formed in a first sheet-like structure, the first sheet-like structure is provided with the connection hole 204, the conductive member 201 is formed in a second sheet-like structure, and the second sheet-like structure is provided with the boss 203. The boss 203 passes through the connection hole 204, and the boss 203 and the connection hole 204 are girth welded. In other embodiment, the boss 203 and the connection hole 204 may be transposed. Moreover, in some embodiments, the flipping member 202 and the conductive member 201 may be alternatively welded together by using a laser penetration welding manner, or the like.

In the present invention, preferably, the flipping member 202 and the conductive member 201 may be electrically disconnected from each other by using a weakening portion. That is, a weakening portion with strength less than that of a weakening portion in another region is provided in a corresponding part. In order that the conductive member 201 and the flipping member 202 are completely disconnected from each other, the weakening portion is usually an annular structure surrounding a connection point between the conductive member and the flipping member 202, for example, the boss welded structure. In this way, electrical disconnection is implemented by means of disconnection of the conductive member 201 or the flipping member 202. The weakening portion may be formed in the flipping member 202 or may be formed in the conductive member 201. In the present invention, preferably, the weakening portion is a bending structure 205. In this embodiment, the conductive member 201 is provided with the bending structure 205 protruding towards the inner part of the case. The bending structure 205 is disposed surrounding a connection point for connecting to the flipping member 202. That is, the conductive member 201 is provided with the bending structure 205 surrounding the boss 203. The bending structure 205 may be formed by means of punching. Preferably, the height H of the bending structure 205 is five to 10 times of the thickness of the conductive member 201. Further, preferably, the multiple is six to seven times. The height H of the bending structure 205 is a height by which the conductive member 201 protrudes towards the inner part of the case, and colloquially, may be a punching depth of the conductive member 201. Preferably, a bending angle of the bending structure 205 is 5° to 15°, and further preferably, is 11° to 13°. Colloquially, the bending angle is a protruding angle of the punching. In the present invention, the bending structure 205 may be further processed and reinforced. In a preferable embodiment of the present invention, when the air pressure within the battery rises, the gas pushes the conductive member 201 and the flipping member 202. The flipping member 202 flips upwards, and drives the conductive member 201 upwards. The bending structure 205 is bent inversely and ruptured. This structure is better than a notch structure, and resolves a problem that a location of the notch easily becomes a bottleneck of a through current and an open circuit structure becomes invalid because of melting or clinkering at the location of the notch when a high current passes through.

In order that the ceramic ring 207 is easily and tightly connected to the cover plate 102, preferably, the inner end surface of the ceramic ring 207 is tightly connected to a transition member 209. The transition member 209 may be connected to the ceramic ring 207 by means of ceramic brazing. In addition, the transition member 209 is tightly connected to the cover plate 102 so that the ceramic ring 207 and the cover plate 102 are disposed at intervals. Because the ceramic ring 207 is not directly assembled with the cover plate 102, the height of the ceramic ring 207 is not limited by a need of being directly assembled with the cover plate 102. In addition, no specific design is required for the ceramic ring 207, so that manufacturing and assembling are convenient.

Generally, the transition member 209 is insulated from the battery post 104. Preferably, an insulation protrusion 206 extends from the inner end surface of the ceramic ring 207 to the inner part of the case. The outer periphery of the battery post 104 is insulated from the transition member 209 by using the insulation protrusion 206. In this embodiment, specifically, the transition member 209 has a groove 210 extending towards the inner part of the case, and a first connecting portion 211 and a second connecting portion 212 extending from the groove 210 to directions of the cover plate 102 and the ceramic ring 207 respectively. The first connecting portion 211 is connected to the cover plate 102, and the second connecting portion 212 is connected to the inner end surface of the ceramic ring 207, so that the inner end surface of the ceramic ring 207 extends into the cover plate 102, thereby well saving space of the battery in a height direction. In some embodiments, the cover plate 102 is provided with a through hole through which the battery post 104 passes. An end surface of the through hole is in a staircase structure. The first connecting portion 211 of the transition member 209 is embedded into and supports the staircase structure.

In this embodiment, further preferably, lower end surfaces of the cover plate 102 and the battery post 104 are both insulated from the battery cell inside the single cell. Preferably, a first insulation member 213 is disposed below the cover plate 102 and an inner surface of the transition member 209. Preferably, a second insulation member 214 is disposed below an inner surface of the battery post 104, and the second insulation member 214 is in fit connection with the first insulation member 213. The battery post 104 is connected to the battery cell by using the internal guide member 215 connected to the cylinder 1042 of the battery post 104. Connections between the internal guide member 215 and the cylinder 1042 and between the internal guide member 215 and the battery cell belong to the prior art. Therefore, details are not described herein.

In this embodiment, to establish a current flowing path to the outside, preferably, the outer end surface of the ceramic ring 207 is tightly connected to a conductive ring 216. The outer periphery of the flipping member 202 is tightly connected to the conductive ring 216. The battery post 104 is insulated from the conductive ring 216 by using the ceramic ring 207. Specifically, the conductive ring 216 includes a conductive connecting portion 2161 located in the inner ring of the ceramic ring and a protruding edge 2162 connected to the outer ring of the ceramic ring. The outer periphery of the flipping member 202 is fixedly connected to the conductive connecting portion 2161 of the conductive ring 216. That is, the flipping member 202 is connected to the ceramic ring 207 by using the conductive connecting portion 2161 of the conductive ring 216. The conductive ring 216 can be used to better weld the flipping member 202 and the ceramic ring 207, and the protruding edge 2162 may be used to establish a current loop between the flipping member 202 and the outside. Moreover, the conductive ring 216 is tightly connected to the ceramic ring 207 so that the outer periphery of the flipping member 202 is sealed, and the air pressure inside the case act on the flipping member without leakage. In the present invention, further preferably, the current interrupt device 200 further includes a covering cap 219. The covering cap 219 and the flipping member 202 are tightly connected to the conductive connecting portion 2161. In this embodiment, specifically, the height of the protruding edge 2162 is the same as that of the covering cap 219, so that sealing can be better performed and a current can be better guided, thereby better implementing stable sealing and assembling of the flipping member 202 and protecting the current interrupt device 200. Moreover, the conductive ring 216 may establish a current loop to the outside by connecting to the covering cap 219 or by using electrode guide pieces directly connected to each other. For example, adjacent single cells 100 or adjacent battery modules may be connected to each other by using electrode guide pieces. In some embodiments, preferably, the covering cap has an air hole 208 that can communicate internal and external gases, thereby facilitating flipping of the flipping member, and improving sensitivity of the current interrupt device.

In a specific ceramic sealing structure in this embodiment, tight connections between the cover plate 102 and the transition member 209, between the transition member 209 and the ceramic ring 207, between the ceramic ring 207 and the conductive ring 216, and between the conductive ring 216 and the flipping member 202 enable the air pressure inside the case to effectively act on the current interrupt device, so that the operation of the current interrupt device is reliable. During assembling, to ensure leak tightness of the current interrupt device, the ceramic ring 207 is tightly connected to the conductive ring 216, the transition member 209, and the battery post 104 by means of ceramic brazing. That is, the ceramic ring 207, the conductive ring 216, the transition member 209, and the battery post 104 may first form an independent assembly, and then the transition member 209 is assembled to the cover plate 102 by means of laser welding. The assembling manner is convenient. Moreover, the conductive member 201 may be connected to the battery post 104 by means of laser welding. The flipping member 202 and the conductive member 201 may be connected to each other by means of laser penetration welding or by using the foregoing boss welded structure. The covering cap 219 may be connected to the conductive ring 216 by means of laser welding. In addition, the battery post 104' and a guide piece of the battery cell may be welded together by means of laser welding, to complete the overall assembly of the current interrupt device 200. The structure of the current interrupt device 200 in this embodiment is mainly described above.

Specifically, the structure of the single cell and the connection between single cells in the battery module may be performed by using conventional technologies. Details are not described herein. For example, as shown in FIG. 1, the adjacent single cells 100 may be connected by using an I-type battery connecting piece.

Moreover, considering a current interrupt effect, costs, and assembling, in the multiple single cells 100 in the same module, the number of single cells provided with the current interrupt device 200 needs to be not greater than three.

In addition, the present invention further provides a power battery. The power battery includes an inclusion body and a battery module accommodated in the inclusion body. The battery module is the battery module described above. A gas detection device for detecting flammable gas is disposed inside the inclusion body. The gas detection device is disposed close to the current interrupt device, to provide a flammable gas signal for a charge/discharge protection system. Moreover, considering costs and the effect, the battery module needs to have only one current interrupt device.

The single cell having a current interrupt device is described above. The current interrupt device implements safety measures by using a mechanical structure of the current interrupt device. The present invention describes in detail below a power battery including a charge/discharge protection system, to improve safety by means of electrical control.

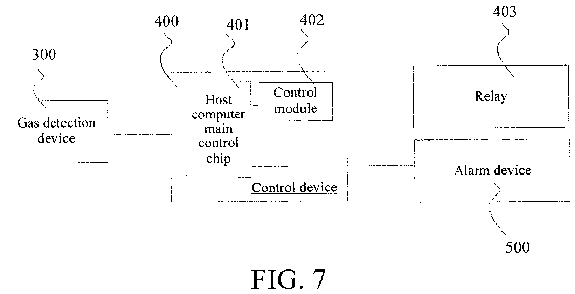

As shown in FIG. 7, the present invention provides a power battery. The power battery may be a power battery having the current interrupt device described above, or another type of power battery. The power battery includes an inclusion body and multiple single cells 100 accommodated in the inclusion body. For example, the multiple single cells 100 may be connected in series or in parallel to form a battery module. A gas detection device 300, for example, a gas sensor, for detecting flammable gas in the power battery is disposed inside the inclusion body, to provide a signal for indicating whether to disconnect a charge/discharge circuit of the power battery.

In addition to including the gas detection device 300 located inside the power battery, the charge/discharge protection system included in the power battery further includes a control device 400 and a circuit switching on/off device.

The gas detection device 300 feeds back a flammable gas signal to the control device 400. The control device 400 is configured to control, according to the flammable gas signal, the circuit switching on/off device to switch off the charge/discharge circuit of the power battery. That is, safety of the present invention is automatic control performed by detecting whether there is flammable gas in the inclusion body. In an emergency state such as overcharging of the battery, flammable gas is produced inside the battery. The part of gas more or less leaks to the inner part of the inclusion body in various manners. In this case, the gas detection device, for example, the gas sensor, can detect the flammable gas, and feeds back such information to the control device. The control device determines, according to whether flammable gas is detected or an amount of the detected flammable gas, whether to disconnect the charge/discharge circuit of the power battery. When flammable gas is detected, or an amount of flammable gas exceeds a preset threshold, the circuit switching on/off device may be controlled to disconnect the charge/discharge circuit of the power battery, to ensure safety of the power battery.

To further reduce potential risks, the power battery further includes an alarm device 500 controlled by the control device 400. In this way, relevant personnel may be instructed, by means of voice, flash, or an alarm device such as a siren, to evacuate the site, thereby reducing potential risks.

As shown in FIG. 7, the control device 400 includes a host computer main control chip 401 of the power battery and a control module 402 in signal connection with the main control chip. The control module 402 is in signal connection with the circuit switching on/off device. The circuit switching on/off device may be a relay 403 located in the charge/discharge circuit, to be controlled by the control module 402 to switch off the charge/discharge circuit. Moreover, the alarm device 500 may be directly in signal connection with the host computer control chip 401, to receive an alarm from an alarm instruction.

In a specific operating process, digital-to-analog conversion, sampled storage, and other processing may be performed on an acquired signal of the gas sensor. Moreover, fault detection may further be performed on the system. When no failure occurs in the system, gas concentration processing may further be performed on the acquired signal, to determine whether flammable gas leaks. When the concentration of the leakage of the flammable gas exceeds a threshold, the host computer main control chip 401 performs operations of interrupting the current and alarming.

In this implementation, the gas detection device is dispose outside the single cell. The flammable gas may be discharged to the outside by pulling apart the weakening portion of the current interrupt device. That is, in the battery module, at least one of the single cells is provided with a current interrupt device for disconnecting the charge/discharge circuit under action of gas pressure inside the single cell, that is, the foregoing current interrupt device. In addition, the current interrupt device can enable gas inside a case to be discharged to the outside in a disconnected state. In this way, the gas detection device in the inclusion body can detect the flammable gas discharged to the outside. In this case, it indicates that an emergency case of overcharging of the battery occurs. In addition, to improve sensitivity of the system, preferably, the gas detection device is disposed close to the current interrupt device, so that the gas detection device can detect a corresponding signal in a timely manner after the flammable gas is released, and feeds back the signal to the control device. Certainly, the gas detection device may also be configured to detect gas released after the explosion relief valve is open.

In a specific embodiment, to discharge the gas to the outside, the current interrupt device in the foregoing embodiment is provided with a cover member. The cover member is provided with an air hole 208 and the flipping member 202 is provided with a weakening portion, so that the gas inside the case can be discharged to the outside after the flipping member and a conductive member are disconnected from each other. The cover member herein may be the covering cap 219 in the foregoing embodiment, so that the gas can be discharged to the outside through the air hole 208 after the corresponding weakening portion is pulled apart, and the flammable gas leaking in the pack can be detected in a timely manner by using the gas detection device.

## Claims

1. A single cell (100), wherein the single cell (100) comprises a case, a battery cell accommodated in the case, an electrode terminal (101) electrically connected to the battery cell, and a cover plate (102) for encapsulating the case, wherein the electrode terminal (101) is disposed in the cover plate (102), the single cell (100) further comprises a current interrupt device (200) electrically connected to the electrode terminal (101), and the current interrupt device (200) is in communication with gas inside the case;
the electrode terminal (101) comprises a battery post (104), wherein one end of the battery post (104) extends into the cover plate (102) and the other end is electrically connected to the battery cell;
the current interrupt device (200) has a conductive member (201) and a flipping member (202) electrically connected to the conductive member (201), the flipping member (202) and the conductive member (201) can be electrically disconnected from each other under action of air pressure, the conductive member (201) is connected to an outer end surface of the battery post (104), **characterised in that**
a ceramic ring (207) is tightly connected between an outer periphery of the flipping member (202) and the cover plate (102), and the outer periphery of the flipping member (202) is tightly connected to an outer end surface of the ceramic ring (207); and
an outer periphery of the battery post (104) is connected to an inner end surface of the ceramic ring (207), and the battery post (104) is insulated from the outer periphery of the flipping member (202) by using the ceramic ring (207).

2. The single cell (100) according to claim 1, wherein the battery post (104) is provided with an air-guide duct communicating the inner part of the single cell (100) and the current interrupt device (200).

3. The single cell (100) according to claim 1, wherein the outer end surface of the battery post (104) is located inside the cover plate (102).

4. The single cell (100) according to claim 1, wherein the battery post (104) comprises a pole cap extending into the cover plate (102), and a cylinder connected to the pole cap and extending into the case, an extension portion extends outwards at a periphery of the pole cap along a radial direction of the battery post (104), an end portion of the extension portion is connected to the inner end surface of the ceramic ring (207), and the inner end surface of the ceramic ring (207) extends into the cover plate (102), wherein the cover plate (102) is preferably provided with a through hole into which the battery post (104) is inserted; and a hole diameter of the through hole is greater than a sum of a diameter of the pole cap and a diameter of the ceramic ring (207), or
wherein the extension portion is preferably provided with an air-guide hole communicating the inner part of the single cell (100) and the current interrupt device (200).

5. The single cell (100) according to claim 1, wherein the outer end surface of the battery post (104) is provided with an accommodation hole, and an outer periphery of the conductive member (201) is fixed to an inner wall of the accommodation hole,
wherein the battery post (104) is preferably provided with an air-guide duct communicating the inner part of the single cell (100) and the current interrupt device (200), and the air-guide duct comprise an air-guide hole communicating the accommodation hole and the inner part of the single cell (100).

6. The single cell (100) according to claim 1, wherein the inner end surface of the ceramic ring (207) is tightly connected to a transition member, the transition member is tightly connected to the cover plate (102), and the transition member is insulated from the battery post (104),
wherein an insulation protrusion preferably extends from the inner end surface of the ceramic ring (207) to the inner part of the case, and the outer periphery at an outer end of the battery post (104) is insulated from the transition member by using the insulation protrusion.

7. The single cell (100) according to claim 6, wherein the transition member has a groove extending towards the inner part of the case, and a first connecting portion and a second connecting portion extending from the groove to directions of the cover plate (102) and the ceramic ring (207) respectively, the first connecting portion is connected to the cover plate (102), and the second connecting portion is connected to the inner end surface of the ceramic ring (207),
wherein the cover plate (102) is preferably provided with a through hole through which the battery post (104) passes, an end surface of the through hole is in a staircase structure, and the first connecting portion of the transition member is embedded into and supports the staircase structure.

8. The single cell (100) according to claim 6, wherein a first insulation member is disposed below the cover plate (102) and an inner surface of the transition member,
wherein a second insulation member is preferably disposed below an inner surface of the battery post (104), and the second insulation member is in fit connection with the first insulation member.

9. The single cell (100) according to claim 1, wherein the outer end surface of the ceramic ring (207) is formed in a stepped structure having an inner ring and an outer ring, and the outer periphery of the flipping member (202) is in embedded connection with the inner ring.

10. The single cell (100) according to claim 1, wherein the outer end surface of the ceramic ring (207) is tightly connected to a conductive ring, the outer periphery of the flipping member (202) is tightly connected to the conductive ring, and the battery post (104) is insulated from the conductive ring by using the ceramic ring (207),
wherein the outer end surface of the ceramic ring (207) is preferably formed in a stepped structure having an inner ring and an outer ring, and the conductive ring comprises the conductive connecting portion (2161) located in the inner ring and a protruding edge connected to the outer ring.

11. The single cell (100) according to claim 1, wherein the current interrupt device further comprises a covering cap (219), the covering cap (219) and the flipping member (202) are tightly connected to the conductive connecting portion (2161), and the covering cap (219) has an air hole,
wherein the flipping member (202) is preferably formed in a first sheet-like structure, the first sheet-like structure is provided with a connection hole (204), the conductive member (201) is formed in a second sheet-like structure, the second sheet-like structure is provided with a boss (203), the boss (203) passes through the connection hole (204), and the boss (203) and the connection hole (204) are girth-welded.

12. The single cell (100) according to claim 1, wherein the conductive member (201) is provided with a bending structure (205) protruding towards the inner part of the case, and the bending structure (205) is disposed surrounding a connection point for connecting to the flipping member (202),
wherein the height of the bending structure (205) is preferably five to 10 times of the thickness of the conductive member (201), or
wherein a bending angle of the bending structure is preferably 5° to 15°.

13. A battery module, wherein the battery module is provided with the single cell (100) according to any one of claims 1 to 12.

14. A battery pack, wherein the battery pack is provided with the battery module according to claim 13,
wherein the battery pack is preferably further provided with a gas detection device located inside the inclusion body and configured to detect flammable gas.

15. An electric vehicle, wherein the electric vehicle is provided with the battery pack according to claim 14.

## Patentansprüche

1. Einzelzelle (100), wobei die Einzelzelle (100) ein Gehäuse, eine in dem Gehäuse aufgenommene Batteriezelle, eine elektrisch mit der Batteriezelle verbundene Elektrodenklemme (101) und eine Abdeckplatte (102) zum Einkapseln des Gehäuses umfasst, wobei die Elektrodenklemme (101) in der Abdeckplatte (102) angeordnet ist, die Einzelzelle (100) weiter eine elektrisch mit der Elektrodenklemme (101) verbundene Stromunterbrechungsvorrichtung (200) umfasst und die Stromunterbrechungsvorrichtung (200) mit einem Gas innerhalb des Gehäuses kommunizierend verbunden ist;
die Elektrodenklemme (101) einen Batteriepol (104) umfasst, wobei ein Ende des Batteriepols (104) sich in die Abdeckplatte (102) erstreckt und das andere Ende elektrisch mit der Batteriezelle verbunden ist;
die Stromunterbrechungsvorrichtung (200) ein leitfähiges Element (201) und ein elektrisch mit dem leitfähigen Element (201) verbundenes Umlegelement (202) aufweist, das Umlegelement (202) und das leitfähige Element (201) unter Einwirkung von Luftdruck elektrisch voneinander getrennt werden können, das leitfähige Element (201) mit einer äußeren Endfläche des Batteriepols (104) verbunden ist, **dadurch gekennzeichnet, dass**
ein Keramikring (207) fest zwischen einen Außenumfang des Umlegelements (202) und die Abdeckplatte (102) geschaltet ist und der Außenumfang des Umlegelements (202) fest mit einer äußeren Endfläche des Keramikrings (207) verbunden ist; und
ein Außenumfang des Batteriepols (104) mit einer inneren Endfläche des Keramikrings (207) verbunden ist und der Batteriepol (104) mittels des Keramikrings (207) gegenüber dem Außenumfang des Umlegelements (202) isoliert ist.

2. Einzelzelle (100) nach Anspruch 1, wobei der Batteriepol (104) mit einem Luftführungskanal bereitgestellt ist, der den inneren Teil der Einzelzelle (100) und die Stromunterbrechungsvorrichtung (200) kommunizierend verbindet.

3. Einzelzelle (100) nach Anspruch 1, wobei sich die äußere Endfläche des Batteriepols (104) innerhalb der Abdeckplatte (102) befindet.

4. Einzelzelle (100) nach Anspruch 1, wobei der Batteriepol (104) eine sich in die Abdeckplatte (102) erstreckende Polkappe und einen mit der Polkappe verbundenen und sich in das Gehäuse erstreckenden Zylinder umfasst, sich ein Verlängerungsabschnitt an einem Umfang der Polkappe entlang einer radialen Richtung des Batteriepols (104) nach außen erstreckt, ein Endabschnitt des Verlängerungsabschnitts mit der inneren Endfläche des Keramikrings (207) verbunden ist und sich die innere Endfläche des Keramikrings (207) in die Abdeckplatte (102) erstreckt, wobei die Abdeckplatte (102) bevorzugt mit einem Durchgangsloch bereitgestellt ist, in das der Batteriepol (104) eingesetzt ist; und ein Lochdurchmesser des Durchgangslochs größer als eine Summe aus einem Durchmesser der Polkappe und einem Durchmesser des Keramikrings (207) ist, oder
wobei der Verlängerungsabschnitt bevorzugt mit einem Luftführungsloch bereitgestellt ist, das den inneren Teil der Einzelzelle (100) und die Stromunterbrechungsvorrichtung (200) kommunizierend verbindet.

5. Einzelzelle (100) nach Anspruch 1, wobei die äußere Endfläche des Batteriepols (104) mit einem Aufnahmeloch bereitgestellt ist und ein Außenumfang des leitfähigen Elements (201) an einer Innenwand des Aufnahmelochs befestigt ist,
wobei der Batteriepol (104) bevorzugt mit einem Luftführungskanal bereitgestellt ist, der den inneren Teil der Einzelzelle (100) und die Stromunterbrechungsvorrichtung (200) kommunizierend verbindet, und der Luftführungskanal ein Luftführungsloch umfasst, das das Aufnahmeloch und den inneren Teil der Einzelzelle (100) kommunizierend verbindet.

6. Einzelzelle (100) nach Anspruch 1, wobei die innere Endfläche des Keramikrings (207) fest mit einem Übergangselement verbunden ist, das Übergangselement fest mit der Abdeckplatte (102) verbunden ist und das Übergangselement gegenüber dem Batteriepol (104) isoliert ist,
wobei sich ein Isolationsüberstand bevorzugt von der inneren Endfläche des Keramikrings (207) zu dem inneren Teil des Gehäuses erstreckt und der Außenumfang an einem äußeren Ende des Batteriepols (104) mittels des Isolationsüberstands gegenüber dem Übergangselement isoliert ist.

7. Einzelzelle (100) nach Anspruch 6, wobei das Übergangselement eine sich zu dem inneren Teil des Gehäuses erstreckende Nut und einen ersten Verbindungsabschnitt und einen zweiten Verbindungsabschnitt, die sich von der Nut in Richtungen der Abdeckplatte (102) bzw. des Keramikrings (207) erstrecken, aufweist, der erste Verbindungsabschnitt mit der Abdeckplatte (102) verbunden ist und der zweite Verbindungsabschnitt mit der inneren Endfläche des Keramikrings (207) verbunden ist,
wobei die Abdeckplatte (102) bevorzugt mit einem Durchgangsloch bereitgestellt ist, durch das der Batteriepol (104) hindurchtritt, eine Endfläche des Durchgangslochs in einer Treppenstruktur ausgebildet ist und der erste Verbindungsabschnitt des Übergangselements in die Treppenstruktur eingebettet ist und diese trägt.

8. Einzelzelle (100) nach Anspruch 6, wobei ein erstes Isolierelement unterhalb der Abdeckplatte (102) und einer Innenfläche des Übergangselements angeordnet ist,
wobei ein zweites Isolierelement bevorzugt unterhalb einer Innenfläche des Batteriepols (104) angeordnet ist und das zweite Isolierelement in einer Passverbindung mit dem ersten Isolierelement steht.

9. Einzelzelle (100) nach Anspruch 1, wobei die äußere Endfläche des Keramikrings (207) in einer abgestuften Struktur, die einen Innenring und einen Außenring aufweist, ausgebildet ist und der Außenumfang des Umlegelements (202) mit dem Innenring in einer eingebetteten Verbindung steht.

10. Einzelzelle (100) nach Anspruch 1, wobei die äußere Endfläche des Keramikrings (207) fest mit einem leitfähigen Ring verbunden ist, der Außenumfang des Umlegelements (202) fest mit dem leitfähigen Ring verbunden ist und der Batteriepol (104) mittels des Keramikrings (207) gegenüber dem leitfähigen Ring isoliert ist,
wobei die äußere Endfläche des Keramikrings (207) bevorzugt in einer abgestuften Struktur, die einen Innenring und einen Außenring aufweist, ausgebildet ist und der leitfähige Ring den sich in dem Innenring befindenden leitfähigen Verbindungsabschnitt (2161) und eine mit dem Außenring verbundene vorstehende Kante umfasst.

11. Einzelzelle (100) nach Anspruch 1, wobei die Stromunterbrechungsvorrichtung weiter eine Abdeckkappe (219) umfasst, die Abdeckkappe (219) und das Umlegelement (202) fest mit dem leitfähigen Verbindungsabschnitt (2161) verbunden sind und die Abdeckkappe (219) ein Luftloch aufweist,
wobei das Umlegelement (202) bevorzugt in einer ersten plattenartigen Struktur ausgebildet ist, die erste plattenartige Struktur mit einem Verbindungsloch (204) bereitgestellt ist, das leitfähige Element (201) in einer zweiten plattenartigen Struktur ausgebildet ist, die zweite plattenartige Struktur mit einer Nabe (203) bereitgestellt ist, die Nabe (203) durch das Verbindungsloch (204) hindurchtritt und die Nabe (203) und das Verbindungsloch (204) umfangsverschweißt sind.

12. Einzelzelle (100) nach Anspruch 1, wobei das leitfähige Element (201) mit einer Biegestruktur (205) bereitgestellt ist, die zu dem inneren Teil des Gehäuses hin vorsteht, und die Biegestruktur (205) so angeordnet ist, dass sie einen Verbindungspunkt zum Verbinden mit dem Umlegelement (202) umgibt,
wobei die Höhe der Biegestruktur (205) bevorzugt fünf bis 10 mal die Dicke des leitfähigen Elements (201) beträgt, oder
wobei ein Biegewinkel der Biegestruktur bevorzugt 5 ° bis 15 ° beträgt.

13. Batteriemodul, wobei das Batteriemodul mit der Einzelzelle (100) nach einem der Ansprüche 1 bis 12 bereitgestellt ist.

14. Batteriepack, wobei der Batteriepack mit dem Batteriemodul nach Anspruch 13 bereitgestellt ist,
wobei der Batteriepack bevorzugt weiter mit einer Gasdetektionsvorrichtung bereitgestellt ist, die sich innerhalb des Einschlusskörpers befindet und dazu konfiguriert ist, brennbares Gas zu detektieren.

15. Elektrofahrzeug, wobei das Elektrofahrzeug mit dem Batteriepack nach Anspruch 14 bereitgestellt ist.

## Revendications

1. Cellule unique (100), dans laquelle la cellule unique (100) comprend un boîtier, une cellule de batterie logée dans le boîtier, une borne d'électrode (101) raccordée électriquement à la cellule de batterie, et une plaque de recouvrement (102) pour encapsuler le boîtier, dans laquelle la borne d'électrode (101) est disposée dans la plaque de recouvrement (102), la cellule unique (100) comprend en outre un dispositif d'interruption de courant (200) raccordé électriquement à la borne d'électrode (101) et le dispositif d'interruption de courant (200) est en communication avec un gaz à l'intérieur du boîtier ;
la borne d'électrode (101) comprend un montant de batterie (104), dans laquelle une extrémité du montant de batterie (104) s'étend dans la plaque de recouvrement (102) et l'autre extrémité est raccordée électriquement à la cellule de batterie ;
le dispositif d'interruption de courant (200) comprend un élément conducteur (201) et un élément de retournement (202) raccordé électriquement à l'élément conducteur (201), l'élément de retournement (202) et l'élément conducteur (201) peuvent être déconnectés électriquement l'un de l'autre sous l'action d'une pression d'air, l'élément conducteur (201) est raccordé à une surface d'extrémité externe du montant de batterie (104), **caractérisée en ce que**
une bague en céramique (207) est raccordée étroitement entre une périphérie externe de l'élément de retournement (202) et la plaque de recouvrement (102) et la périphérie externe de l'élément de retournement (202) est raccordée étroitement à la surface d'extrémité externe de la bague en céramique (207) ; et
une périphérie externe du montant de batterie (104) est raccordée à une surface d'extrémité interne de la bague en céramique (207) et le montant de batterie (104) est isolé de la périphérie externe de l'élément de retournement (202) en utilisant la bague en céramique (207).

2. Cellule unique (100) selon la revendication 1, dans laquelle le montant de batterie (104) est pourvu d'un conduit de guidage d'air communiquant avec la partie interne de la cellule unique (100) et le dispositif d'interruption de courant (200).

3. Cellule unique (100) selon la revendication 1, dans laquelle la surface d'extrémité externe du montant de batterie (104) est située à l'intérieur de la plaque de recouvrement (102).

4. Cellule unique (100) selon la revendication 1, dans laquelle le montant de batterie (104) comprend un capuchon de pôle s'étendant dans la plaque de recouvrement (102) et un cylindre raccordé au capuchon de pôle et s'étendant dans le boîtier, une partie d'extension s'étend vers l'extérieur au niveau d'une périphérie du capuchon de pôle le long d'une direction radiale du montant de batterie (104), une partie d'extrémité de la partie d'extension est raccordée à la surface d'extrémité interne de la bague en céramique (207) et la surface d'extrémité interne de la bague en céramique (207) s'étend dans la plaque de recouvrement (102), dans laquelle la plaque de recouvrement (102) est, de préférence, pourvue d'un trou traversant dans lequel le montant de batterie (104) est inséré ; et un diamètre de trou du trou traversant est plus grand qu'une somme d'un diamètre du capuchon de pôle et d'un diamètre de la bague en céramique (207), ou
dans laquelle la partie d'extension est, de préférence, pourvue d'un trou de guidage d'air communiquant avec la partie interne de la cellule unique (100) et le dispositif d'interruption de courant (200).

5. Cellule unique (100) selon la revendication 1, dans laquelle la surface d'extrémité externe du montant de batterie (104) est pourvue d'un trou de réception et une périphérie externe de l'élément conducteur (201) est fixée à une paroi interne du trou de réception,
dans laquelle le montant de batterie (104) est, de préférence, pourvu d'un conduit de guidage d'air communiquant avec la partie interne de la cellule unique (100) et le dispositif d'interruption de courant (200), et le conduit de guidage d'air comprend un trou de guidage d'air communiquant avec le trou de réception et la partie interne de la cellule unique (100).

6. Cellule unique (100) selon la revendication 1, dans laquelle la surface d'extrémité interne de la bague en céramique (207) est raccordée étroitement à un élément de transition, l'élément de transition est raccordé étroitement à la plaque de recouvrement (102) et l'élément de transition est isolé du montant de batterie (104),
dans laquelle une saillie d'isolation s'étend, de préférence, depuis la surface d'extrémité interne de la bague en céramique (204) vers la partie interne du boîtier et la périphérie externe au niveau d'une extrémité externe du montant de batterie (104) est isolée de l'élément de transition en utilisant la saillie d'isolation.

7. Cellule unique (100) selon la revendication 6, dans laquelle l'élément de transition comporte une rainure s'étendant vers la partie interne du boîtier et une première partie de liaison et une seconde partie de liaison s'étendant depuis la rainure dans des directions de la plaque de recouvrement (102) et de la bague en céramique (207) respectivement, la première partie de liaison est raccordée à la plaque de recouvrement (102) et la seconde partie de liaison est raccordée à la surface d'extrémité interne de la bague en céramique (207),
dans laquelle la plaque de recouvrement (102) est, de préférence, pourvue d'un trou traversant à travers lequel le montant de batterie (104) passe, une surface d'extrémité du trou traversant se trouve dans une structure en escalier et la première partie de liaison de l'élément de transition est intégrée dans la structure en escalier et supporte celle-ci.

8. Cellule unique (100) selon la revendication 6, dans laquelle un premier élément d'isolation est disposé en dessous de la plaque de recouvrement (102) et d'une surface interne de l'élément de transition,
dans laquelle un second élément d'isolation est, de préférence, disposé en dessous d'une surface interne du montant de batterie (104) et le second élément d'isolation est en liaison par ajustement avec le premier élément d'isolation.

9. Cellule unique (100) selon la revendication 1, dans laquelle la surface d'extrémité externe de la bague en céramique (207) est formée dans une structure étagée ayant une bague interne et une bague externe et la périphérie externe de l'élément de retournement (202) est en liaison intégrée avec la bague interne.

10. Cellule unique (100) selon la revendication 1, dans laquelle la surface d'extrémité externe de la bague en céramique (207) est raccordée étroitement à une bague conductrice, la périphérie externe de l'élément de retournement (202) est étroitement raccordée à la bague conductrice et le montant de batterie (104) est isolé de la bague conductrice en utilisant la bague en céramique (207),
dans laquelle la surface d'extrémité externe de la bague en céramique (207) est, de préférence, formée dans une structure étagée ayant une bague interne et une bague externe et la bague conductrice comprend la partie de liaison conductrice (2161) située dans la bague interne et un bord saillant raccordé à la bague externe.

11. Cellule unique (100) selon la revendication 1, dans laquelle le dispositif d'interruption de courant comprend en outre un capot de couverture (219), le capot de couverture (219) et l'élément de retournement (202) sont raccordés étroitement à la partie de liaison conductrice (2161) et le capot de couverture (219) comporte un trou d'air,
dans laquelle l'élément de retournement (202) est, de préférence, formé dans une première structure semblable à une feuille, la première structure semblable à une feuille est pourvue d'un trou de liaison (204), l'élément conducteur (201) est formé dans une seconde structure semblable à une feuille, la seconde structure semblable à une feuille est pourvue d'un bossage (203), le bossage (203) passe à travers le trou de liaison (204) et le bossage (203) et le trou de liaison (204) sont soudés à la circonférence.

12. Cellule unique (100) selon la revendication 1, dans laquelle l'élément conducteur (201) est pourvu d'une structure de flexion (205) faisant saillie vers la partie interne du boîtier et la structure de flexion (205) est disposée de sorte à entourer un point de liaison pour être raccordée à l'élément de retournement (202),
dans laquelle la hauteur de la structure de flexion (205) fait, de préférence, de cinq à 10 fois l'épaisseur de l'élément conducteur (201) ou
dans laquelle un angle de flexion de la structure de flexion est, de préférence, compris entre 5° et 15°.

13. Module de batterie, dans lequel le module de batterie est pourvu de la cellule unique (100) selon l'une quelconque des revendications 1 à 12.

14. Bloc-batterie, dans lequel le bloc-batterie est pourvu du module de batterie selon la revendication 13,
dans lequel le bloc-batterie est, de préférence, en outre pourvu d'un dispositif de détection de gaz situé à l'intérieur du corps d'inclusion et configuré pour détecter un gaz inflammable.

15. Véhicule électrique, dans lequel le véhicule électrique est pourvu du bloc-batterie selon la revendication 14.
